# EUROPÄISCHE PATENTANMELDUNG

(11) **EP 1 310 160 A2**
(43) Veröffentlichungstag der Anmeldung: **14.05.2003**
(21) Anmeldenummer: 02025224.3
(22) Anmeldetag: 12.11.2002
(51) Int. Cl.: A01K 1/12

(54) **Mobiler automatischer Melkstand**

(30) Priorität: 12.11.2001 DE 10155546
(71) Anmelder: Westfalia Landtechnik GmbH, 59302 Oelde (DE)
(72) Erfinder: Osthues, Uwe, 58708 Menden (DE)
(74) Vertreter: Grünecker, Kinkeldey, Stockmair & Schwanhäusser Anwaltssozietät

(57) **Zusammenfassung**

Die vorliegende Erfindung betrifft einen mobilen Melkstand, mit dem die zu melkenden Tiere an jedem beliebigen Ort, beispielsweise auch auf der Weide gemolken, werden können. Der vorliegenden Erfindung liegt das Problem zugrunde einen mobilen Melkstand anzugeben, mit dem die Milchleistung insbesondere auf Weiden gehaltener, zu melkender Tiere erhöht und das Wohlbefinden der Tiere verbessert werden kann. Zur Lösung des Problems wird mit der vorliegenden Erfindung ein fahrbarer Melkstand mit einem Laufgang (8) für das zu melkende Tier mit einem Eingang (10) an einem Ende des Laufganges und einem Ausgang (12), an dessen anderem Ende und mit wenigstens einem an die Zitzen des auf dem Laufgang befindlichen zu melkenden Tieres anlegbaren Melkzeug mit Melkbechern vorgeschlagen. Wenigstens eine Einrichtung zum automatischen Heranführen und vorzugsweise Ansetzen der Melkbecher an die Zitzen des zu melkenden Tieres ist vorgesehen.

## Beschreibung

Die vorliegende Erfindung betrifft einen mobilen Melkstand, mit dem die zu melkenden Tiere an jedem beliebigen Ort, beispielsweise auch auf der Weide gemolken, werden können.

Weidemelkstände sind als solche bekannt und sind derart vorbereitet, dass sie von einem oder mehreren Melkern bedient werden können. Zum Melken einer Herde begibt sich ein Melker z.B. auf die Weide und besetzt den Melkstand. Nachdem er oder eine zweite Person die Tiere zusammengetrieben hat, werden sämtliche Tiere nacheinander gemolken. Je nach Herdengröße benötigen die Bedienpersonen bis zu einigen Stunden, um die gesamte Herde zu melken. Erst anschließend können sich die Melker wieder von der Weide entfernen, um anderen Tätigkeiten nachzugehen.

Die Bereitstellung von Personal an dem Weidemelkstand ist deshalb zeitaufwendig. Gegenüber dem Melken im Stall wird der Zeitaufwand noch durch die An- und Abfahrt zur Weide vergrößert, so dass das Melken auf der Weide mit einem Weidemelkstand einen deutlich höheren Aufwand bedeutet.

Darüber hinaus werden der Herde feste Melkzeiten vorgegeben, die nicht zwingend dem natürlichen Bedürfnis der zu melkenden Tiere nach Milchabgabe entsprechen. Bei stationären Weidemelkständen sind außerdem die Wege für die Tiere sehr weit.

Aus der EP 0 270 165 A1 ist ein mobiler Melkcontainer bekannt, der auf der Ladefläche eines Lastkraftwagens transportabel ist. Ein derartiger schwerer Melkcontainer eignet sich nicht für einen häufigen Ortswechsel.

Der vorliegenden Erfindung liegt das Problem zugrunde, einen mobilen Melkstand zur Verfügung zu stellen, mit dem die vorstehend beschriebenen Nachteile behoben werden.

Insbesondere liegt der vorliegenden Erfindung das Problem zugrunde, einen mobilen Melkstand zur Verfügung zu stellen, mit dem die Milchleistung insbesondere auf Weiden gehaltener, zu melkender Tiere erhöht und das Wohlbefinden der Tiere verbessert werden kann.

Zur Lösung des Problems wird mit der vorliegenden Erfindung ein mobiler Melkstand mit den Merkmalen von Anspruch 1 vorgeschlagen. Bevorzugte Weiterbildungen sind Gegenstand der Unteransprüche.

Der erfindungsgemäße Melkstand weist einen Melkbereich für das zu melkende Tier sowie ferner wenigstens ein Melkzeug mit Melkbechern auf, die an die Zitzen des zu melkenden Tieres anlegbar sind. Weiterhin hat der mobile Melkstand wenigstens eine Einrichtung zum automatischen Heranführen und vorzugsweise auch Anlegen der Melkbecher an die Zitzen des zu melkenden Tieres. Der mobile Melkstand ist als fahrbarer Melkstand ausgebildet, d.h. kann von einem Ort zum anderen verfahren werden.

Der fahrbare Melkstand kann als Selbstfahrer ausgebildet sein, oder aber als Anhänger. Vorzugsweise sind an dem mobilen Melkstand Räder bzw. ein Rädersatz vorgesehen. Der Melkstand kann auch dazu eingerichtet sein, auf einem Schienensystem verfahrbar zu sein. Mittels Rädern ist der mobile Melkstand schnell und unkompliziert von einem Ort zum nächsten Ort bewegbar. Der Melkstand kann einen Motor als Antrieb aufweisen.

Der erfindungsgemäße Melkstand kann vorzugsweise im Blickkontakt der Tiere aufgestellt werden. Hierdurch werden die Tiere motiviert, öfters zum Melken zu gehen. Bei konventionellen Weidemelkständen und großen Weiden können die Tiere den Blickkontakt zu dem Melkstand verlieren. Die Melkfrequenz und die Milchleistung können geringer werden.

Der erfindungsgemäße Melkstand hat darüber hinaus eine Einrichtung zum automatischen Heranführen der Melkbecher an die Zitzen des zu melkenden Tieres. Schon dadurch kann ein erheblicher Teil der Arbeitszeit eines Melkers eingespart werden, da dieser Arbeitsschritt für den Melker entfällt.

In einer bevorzugten Weiterbildung erfolgt auch das Ansetzen wenigstens eines Zitzenbechers automatisch, so dass vorzugsweise ein vollautomatischen Melken ermöglicht wird. Dazu kann auch ein separater und automatischer Vorreinigungsschritt des Euters des zu melkenden Tieres in z.B. einer (auch separaten) Vorbereitungsbox erfolgen. Die Präparation und Stimulation kann halb- oder vollautomatisch durchgeführt werden.

Ein im Melkbereich befindliches Tier kann dementsprechend durch automatische Betätigung der Einrichtung gemolken werden, d.h. die Melkbecher werden an das Euter des zu melkenden Tieres herangeführt und an die jeweiligen Zitzen angesetzt.

Das Vorhandensein eines zu melkenden Tieres in dem Melkbereich oder auf dem Laufgang kann durch Sensoren erfasst werden, wie sie z.B. im Stand der Technik bekannt geworden sind. Vorzugsweise sind die Sensoren mit einer Steuerungseinrichtung verbunden, die auch auf die Einrichtung zum automatischen Heranführen und Ansetzen der Melkbecher einwirkt.

Unter Melkbereich im Sinne dieser Anmeldung wird der Bereich verstanden, in dem die Tiere behandelt werden. Damit ist auch der Bereich der Vorbereitung und der Nachbereitung umfasst, wenn z.B. separate Bereiche für ein Vor- und/oder Nachbehandeln vorgesehen sind. Zum Melkbereich in diesem Sinne zählt auch der Laufgang, den der Melkstand in einer bevorzugten Gestaltung aufweist. Der Laufgang kann durch den gesamten Melkstand durch bzw. daran vorbeiführen.

Unterhalb wenigstens eines Teils des Melkbereichs ist vorzugsweise ein Bodenelement angeordnet, das als Laufgang dient. Der Laufgang kann nur im Bereich des Melkplatzes angeordnet sein oder sich auch im Bereich eventueller Vor- und Nachbereitungseinrichtungen erstrecken.

Vorzugsweise steuert die Steuerungseinrichtung darüber hinaus z.B. bewegliche Sperrgitter, mit denen das zu melkende Tier vorzugsweise auf dem Laufgang an z.B. einer vorbestimmten Stelle festgehalten wird. Nach Betätigung der Sperrgitter zum Absperren eines Aufenthaltsbereiches für das zu melkende Tier wird die Einrichtung zum automatischen Heranführen und Ansetzen gleichfalls durch eine Steuereinheit betätigt, so dass die Melkbecher an die Zitzen des zu melkenden Tieres herangeführt und an diese angesetzt werden.

Ebenfalls über eine Steuereinheit erfolgt dann die Steuerung des eigentlichen Melkvorganges. Dabei kann es sich insgesamt um eine zentrale Steuereinheit handeln. Ebenso können auch zwei oder mehr dezentrale Steuereinheiten vorgesehen sein, die den gesamten Vorgang steuern.

Nachdem die (zentrale) Steuereinheit das Ende des Melkvorganges bei nachlassendem Milchstrom ermittelt hat, werden die Melkbecher von den Zitzen des zu melkenden Tieres abgezogen. Das kann beispielsweise durch erneutes Betätigen der Einrichtung erfolgen, die an die Melkbecher herangeführt wird, die Melkbecher greift und diese von dem Euter des zu melkenden Tieres abzieht. Es kann auch möglich sein, dass zur Abnahme das Vakuum an den Melkbechern abgeschaltet und die Milchschläuche mit Melkbechern eingezogen werden.

Die Einrichtung zum automatischen Heranführen und/oder Ansetzen der Melkbecher an die Zitzen des zu melkenden Tieres ermöglicht dementsprechend ein automatisches Melken, d.h. ein Melken der zu melkenden Tiere, ohne dass hierfür ein hoher Zeitbedarf des Personals erforderlich ist. Es kann ein erheblicher Zeitanteil eingespart werden. Außerdem kann der nötige Zeitaufwand flexibler auf den Tagesablauf verteilt werden, da z.B. eine Auswertung der statistisch erfassten Daten jederzeit erfolgen kann.

Die Tiere der Herde können bei Verwendung des erfindungsgemäßen mobilen Melkstands gemäß ihrem natürlichen Bedürfnis oder Melkrhythmus den Laufgang betreten und werden automatisch gemolken, wenn sie melkberechtigt sind. Melkberechtigt sind Tiere z.B., wenn sie gesund sind und seit dem letzten Melkvorgang wenigstens eine vorbestimmte oder aus den Tierdaten ermittelte Zeitspanne vergangen ist. Das steigert sowohl die Milchleistung als auch das Wohlbefinden der zu melkenden Tiere.

In einer bevorzugten Weiterbildung kann der mobile und fahrbare Melkstand sowohl im Sommer als auch im Winter benutzt werden. Im Sommer, wenn die Herde der zu melkenden Tiere regelmäßig auf der Weide ist, wird der Melkstand auf eine Weide gefahren. Das ermöglicht eine besonders tiergerechte Haltung, da die Tiere sich auf der Weide frei bewegen können.

Im Winter kann der fahrbare mobile Melkstand hingegen im Bereich der Stallung angeordnet werden. Der erfindungsgemäße Melkstand bietet somit eine gegenüber dem Stand der Technik verbesserte Nutzbarkeit. Die Investition des Melkstandes kann über das gesamte Jahr amortisiert werden.

Genauso ist in Übergangzeiten aber auch tagsüber eine Nutzung auf der Weide und abends im Stallbereich möglich. Dann holt eine Bedienperson den mobilen und fahrbaren Weidemelkstand z.B. gegen Abend von der Weide zum Stall, um ihn morgens wieder auf die Weide zu bringen. So ist auch die Verwendung auf zwei oder mehr unterschiedlichen Weiden möglich, indem der Melkstand von einer Weide zur nächsten verfahren wird.

Der erfindungsgemäße mobile Melkstand kann als Tandemmelkstand ausgebildet sein. Bei dieser Ausgestaltung ist ein durchgängiger Laufgang vorgesehen, von dem aus ein oder auch mehr in Laufrichtung hintereinander angeordnete Melkplätze zugänglich sind.

Alternativ kann der erfindungsgemäße mobile Melkstand auch als Durchtreibvariante vorgesehen sein. Bei dieser Ausgestaltung befinden sich vorzugsweise ein oder auch mehrere Melkplätze unmittelbar auf dem Laufgang hintereinander.

Zur Bereitstellung der nötigen Bodenfreiheit beim Transport des Melkstandes unter gleichzeitiger Beachtung einer geringen Einstiegshöhe für die zu melkenden Tiere wird gemäß einer bevorzugten Weiterbildung der vorliegenden Erfindung vorgeschlagen, dass ein zumindest den Melkbereich oder den Laufgang tragendes Bodenelement gegenüber einem Rahmengestell absenkbar ist, um das Bodenelement von einer Verfahrstellung in eine Absenkstellung zu verbringen.

Bei dieser Ausgestaltung bleibt das an einem Verwendungsort abgesetzte Rahmengestell ortsfest, wohingegen das Bodenelement vor der Inbetriebnahme des Melkstandes abgesenkt wird, um den Laufgang möglichst nahe am Boden, vorzugsweise nahezu ebenerdig anzuordnen.

Diese Ausgestaltung ist sehr vorteilhaft, da insbesondere Kühe nur ungern eine schräge Lauffläche hinabsteigen. Ein ebener Laufgang auf Weidehöhe oder etwa auf Weidehöhe bietet da erhebliche Vorteile. Gelangen Kühe zu schräg hinab führenden Laufflächen, so kann es passieren, dass das eine oder andere Tier für geraume Zeit stehen bleibt und auf diese Art und Weise den Laufgang und das Melken weiterer Tiere blockiert. Durch die erfindungsgemäße Absenkung des Laufganges können derartige Probleme vermieden werden, was die Zufriedenheit und Milchleistung der Tiere erhöhen kann.

Es ist auch möglich, dass kein eigener Laufgang vorgesehen ist, sondern, dass die Tiere auf dem Weideboden durch den Melkstand laufen. Vorteilhaft an dieser Lösung ist, dass die Tiere weder hoch- noch runterlaufen müssen.

Bevorzugt ist ein Laufgang oder ein Melkplatz vorgesehen, welche wenigstens eine feste untere Bodenfläche zur Verfügung stellen, so dass das Tier beim Melken nicht auf der Weide direkt steht. Dadurch wird eine definierte untere Bodenfläche zur Verfügung gestellt.

Gemäß einer weiteren bevorzugten Ausgestaltung der vorliegenden Erfindung ist das Rahmengestell mit Rädern versehen, um ein verfahrbares Chassis auszubilden. Zusätzlich können Antriebsmittel vorgesehen sein, so dass der mobile Melkstand nach Art eines Selbstfahrers ausgebildet ist. Kostengünstiger lässt sich der mobile Melkstand indes herstellen, wenn das verfahrbare Chassis einen Anhänger bildet.

Gemäß einer weiteren bevorzugten Ausgestaltung, bei welcher die Oberfläche des Laufganges möglichst dicht über dem Grund angeordnet werden kann und bei der vorzugsweise das Bodenelement mit dem Chassis zu einer Einheit verbunden ist, überragen die Räder in der Absenkstellung zumindest die Lauffläche wenigstens eines Teiles des Laufganges.

Dies kann dadurch erreicht werden, dass zur Aufnahme der Räder in der Absenkstellung Taschen in einem Teilbereich der Lauffläche des Laufganges vorgesehen sind. Eine möglichst geringe Behinderung insbesondere durch Gehäuseteile, die über die Lauffläche des Laufganges ragen , wird durch Mittel verhindert, die eine Verstellung der Räder in eine Absenkstellung ermöglichen.

Diese Absenkstellung kann dadurch gebildet sein, dass sämtliche Räder in etwa um 90° zu der üblichen Verfahrrichtung verschwenkt sind. Hierzu kann insbesondere ein selbstfahrender fahrbarer Melkstand eine Allradlenkung oder eine Hundeganglenkung aufweisen.

Im erstgenannten Fall sind die Vorder- und Hinterachse lenkbar, verschwenken sich bei einer Lenkbewegung jedoch gegensinnig. Im zweiten Fall sind auch Vorder- und Hinterachse, gegebenenfalls weitere Achsen lenkbar, verschwenken jedoch bei einer Lenkbewegung gleichsinnig.

Der mobile Melkstand kann besonders weit in Richtung auf den Boden ohne Verlegung des Laufganges dadurch abgesenkt werden, dass die Laufräder z.B. in Breitenrichtung bewegt werden und in der Absenkstellung außerhalb der äußeren Umgrenzung des Chassis liegen.

Gemäß einer bevorzugten Weiterbildung der Erfindung ist eine Greifeinrichtung als Bestandteil der Einrichtung zum automatischen Heranführen und Anlegen der Melkbecher an die Zitzen vorgesehen, mit der das in einer Ruhestellung befindliche Melkzeug greifbar ist, insbesondere durch Greifen der Melkbecher des Melkzeuges.

Die Greifeinrichtung ist vorzugsweise derart vorbereitet, dass nach dem Ansetzen der Melkbecher an die Zitze des zu melkenden Tieres die Einrichtung in ihre Ausgangsstellung zurückfährt. Mithin kann die Einrichtung zum automatischen Heranführen und Anlegen der Melkbecher an die Zitzen beim Melken selbst nicht beispielsweise durch Tritte des zu melkenden Tieres beschädigt werden.

Ein möglichst platzsparender Aufbau und eine kompakte Ausgestaltung des mobilen Melkstandes kann z.B. dadurch ermöglicht werden, dass das Melkzeug in seiner Ruhestellung unter dem Laufgang angeordnet ist. Zum Anlegen an die Zitzen wird das Melkzeug mit der Einrichtung zum automatischen Heranführen und Anlegen der Melkbecher an die Zitzen in eine über dem Laufgang befindliche Melkstellung verbracht.

Zum Schutz des Melkzeuges in der Ruhestellung ist vorzugsweise eine das Melkzeug abdeckende Verschlusseinrichtung vorgesehen, die in ihrer geschlossenen Stellung im Wesentlichen bündig zu der Oberfläche des Laufganges ist. Die Verschlusseinrichtung kann vorzugsweise ein oder mehrere verschieb- bzw. verschwenkbare Verschlussklappen umfassen.

Zur Vermeidung von Verunreinigungen in der Milch und der Übertragung von Krankheiten zwischen Tieren einer Herde ist es ferner zu bevorzugen, eine an das Euter des zu melkenden Tieres automatisch zustellbare Euterreinigungs- und/oder desinfektionseinrichtung vorzusehen.

Diese kann sich ebenso wie die Einrichtung zum automatischen Heranführen und Ansetzen der Melkbecher in ihrer Ruhestellung entweder unterhalb des Laufganges oder in einem in Laufrichtung seitlich neben dem Laufgang angeordneten Technikraum befinden und wird lediglich zur Reinigung des Tieres in den Laufgang vorgeschoben und an das Euter des Tieres verbracht.

Eine derartige Einrichtung kann auch zur Nachbehandlung nach dem Melken dienen. Insbesondere können die Zitzen desinfiziert und/oder mit einem Pflegemittel behandelt werden, um das Euter vor Erregern und Schmutz zu schützen. Beispielsweise ist ein Dippen nach dem Melken vorteilhaft. Als Pflegemittel werden vorzugsweise solche Pflegemittel eingesetzt, wie sie zur Pflege von Eutern beim automatischen oder manuellen Melken bekannt sind.

In an sich bekannter Weise können auf dem Laufgang mehrere Stellplätze vorgesehen sein. Es kann zum einen ein erster Stellplatz vorgesehen sein, dem die Euterreinigungseinrichtung zugeordnet ist sowie ein zweiter Stellplatz, welcher zwischen dem ersten Stellplatz und dem Ausgang angeordnet ist und dem die Einrichtung zum automatischen Heranführen und Ansetzen der Melkbecher zugeordnet ist. Dem Stellplatz kann in an sich bekannter Weise eine Futterabgabestation zugeordnet sein. Darüber hinaus ist es möglich, eine Tränke für jedes zu melkende Tier an jedem Stellplatz vorzusehen.

Es kann aber auch nur ein Stellplatz vorgesehen sein, an dem die Vorreinigung und/oder der Melkvorgang selbst und/oder eine eventuelle Nachbehandlung erfolgt. Die Einrichtung zum automatischen Heranführen der Melkbecher übernimmt in dieser Ausgestaltung vorzugsweise auch die Aufgabe des Anlegens der Melkbecher und des Heranführens einer Reinigungseinheit an das Euter. Zur Positionierung der einzelnen Komponenten kann beispielsweise ein Roboter bzw. Roboterarm (ein sogenannter Industrieroboter) dienen, wie er z.B. in der Fertigung unterschiedlicher Industriezweige eingesetzt wird.

Ein Roboter bzw. Roboterarm im Sinne dieser Anmeldung kann entlang zwei oder drei Achsen verfahrbar sein. Der Roboterarm kann auch (zusätzlich oder anstatt zu einer axialen Verfahrbarkeit) teil- bzw. abschnittsweise um eine, zwei, drei, vier, fünf oder mehr Achsen drehbar sein, so dass eine auf den Anwendungsfall zugeschnittene Bewegung ermöglicht wird.

Es kann auch ein mehrdimensional verfahrbarer Greifarm dazu eingesetzt werden.

Gemäß einer bevorzugten Weiterbildung hat der mobile Melkstand eine Schnittstellenanordnung zum lösbaren Anschluss von Schläuchen. Über diese kann ermolkene Milch von dem Melkstand abgeführt und Futter bzw. Wasser dem Melkstand zugeführt werden.

Vorzugsweise ist die Schnittstellenanordnung derart ausgebildet, dass beim Anschließen der Schnittstellenanordnung zeitgleich mehrere Schläuche angeschlossen werden. An ihrem anderen Ende sind die Schläuche mit Tanks bzw. Vorräten verbunden, welche zumindest im Sommer zwischen der mobilen Melkeinrichtung und dem landwirtschaftlichen Betrieb pendelt um Futter bzw. Trink- und Reinigungswasser zu der Melkeinrichtung auf der Weide zu bringen und ermolkene Milch abzuholen.

In einer weiteren bevorzugten Weiterbildung der Erfindung ist der mobile Melkstand als automatischer führerloser Selbstfahrer ausgebildet. In dieser Weiterbildung kann der mobile Melkstand auch ohne Bedienperson von einer Position zu einer anderen Position fahren. Dabei werden die Sicherheitsstandards über geeignete Maßnahmen gewährleistet, wie sie auch beim automatischen Verfahren anderer Einrichtungen (Züge, Roboter, automatische Lastenwagen etc.) auf unterschiedlichen Gebieten der Technik bekannt geworden sind. Die Verfahrbarkeit kann uneingeschränkt auf dem gesamten Gelände oder beschränkt auf vorgegebenen Wegen möglich sein.

Vorzugsweise ist in dieser Weiterbildung eine Positionserfassungseinrichtung zur Erfassung bzw. Bestimmung der Position des mobilen Melkstandes vorhanden. Das kann über ein Wegeerfassungseinrichtung erfolgen, die von einem zunächst bekannten Standort aus die zurückgelegten Distanzen und Richtungen erfasst. In regel- oder auch unregelmäßigen oder Zeitabständen kann ein Positionsabgleich oder eine Positionskalibrierung erfolgen.

Die Positionskalibrierung kann automatisch oder manuell erfolgen. Beispielsweise kann der Abgleich am Weidetor oder auch an anderen geeigneten Stellen auf Knopfdruck manuell oder automatisch erfolgen. Das Positionskalibrierungsignal kann per Funk empfangen werden.

Zur Positionsbestimmung kann auch ein Verfahren angewendet werden, wie es grundsätzlich auch zur Tiererkennung in Melkständen verwendet wird, indem ein Signal eines ortsfesten Signalgebers ausgestrahlt wird, welches von dem mobilen Melkstand aufgenommen und ausgewertet wird.

Ebenso ist auch das umgekehrte Prinzip möglich, indem nämlich an vorbestimmten Orten ein Signalempfänger/-sender angeordnet ist, welcher ein Signal des mobilen Melkstandes aufnimmt und modifiziert zurücksendet. Dazu können beispielsweise Sende-/Empfangseinrichtungen oder Transponder, Responder und ähnliche Einrichtungen dienen, die an die speziellen Anforderungen (z.B. Reichweite) angepasst sind.

Genauso kann der mobile Melkstand auch über ein GPS-System oder ein dem GPS-System ähnliches System verfügen und über die Empfangssignale mehrerer z.B. ortsfester Sender die aktuelle Position bestimmen. Dazu kann beispielsweise ein Phasenunterschied oder ein Laufzeitunterschied unterschiedlicher Signale ausgewertet werden.

Es ist auch möglich, dass der mobile Melkstand über z.B. einen Sender ein Signal (oder mehrere Signale) ausstrahlt, welches von stationären Einrichtungen auf der Weide (oder geeigneten anderen Orten) empfangen und modifiziert zurückgesendet wird. Über die Auswertung der zurückerhaltenen Signale kann eine Positionsbestimmung des mobilen Melkstandes erfolgen, indem die Laufzeit oder Informationen, die in den zurückgestrahlten Signalen enthaltenen sind, ausgewertet werden.

Über derartige oder ähnliche Techniken ist es möglich, dass eine Steuerungseinheit des mobilen Melkstandes ständig oder wenigstens periodisch Kenntnis von der Position des mobilen Melkstandes hat. Damit kann auch eine zeitabhängige Positionierung des mobilen Melkstandes erfolgen. Beispielsweise kann die Position des mobilen Melkstandes in Abhängigkeit von der Tageszeit gewählt werden.

Das ist sehr vorteilhaft. Viele Tiere einer Herde entfernen sich beispielsweise morgens soweit als möglich von dem Zugang zur Weide, nachdem die Tiere morgens auf die Weide gebracht werden. Im Verlauf eines Tages kehrt eine Herde oft langsam wieder zum Eingangsbereich zurück. Über eine automatische Positionierung des mobilen Melkstandes in Abhängigkeit von der Tageszeit kann hier eine herdennahe Positionierung des mobilen Melkstandes erreicht werden, um so den mobilen Melkstand im wesentlichen immer in Sicht- und Reichweite der Tiere zu positionieren. Dadurch kann die Melkbereitschaft der Tiere vergrößert werden.

In einer bevorzugten Weiterbildung ist wenigstens eine ungefähre Positionserkennung wenigstens eines Tieres vorgesehen. Besonders bevorzugt ist eine Erkennung der ungefähren Position der Herde möglich. Es ist auch möglich, dass die aktuellen Positionen einer Vielzahl der Tiere der Herde wenigstens zeitweise bestimmt werden kann.

Das wird vorzugsweise über ein System aus wenigstens einem Empfänger und wenigstens einem Sender ermöglicht. Beispielsweise kann ein System eingesetzt werden, wie es auch schon zur Bestimmung der Position des mobilen Melkstandes beschrieben wurde. In einer bevorzugten Ausgestaltung dient das System einerseits zur Bestimmung der Position wenigstens eines Tieres und gleichzeitig zur Bestimmung der Position des mobilen Melkstandes.

Vorzugsweise ist es möglich, nicht nur die Position eines Tieres zu erkennen, sondern gleichzeitig auch das entsprechende Tier zu identifizieren. Dann kann die Position des Tieres über einen Zeitraum hinweg verfolgt werden, um so Rückschlüsse über das Tierverhalten zu erlangen. Für eine spätere Auswertung werden die Positionswerte in einem Speicher abgelegt.

Bei den Weiterbildungen, bei denen eine Positionsbestimmung eines Tieres oder mehrerer Tiere erfolgt, kann das GPS-System oder ein ähnliches eingesetzt werden. Es ist auch möglich ein ähnliches Sytem nur lokal auf einer oder mehreren Weiden einzusetzen.

Bevorzugt ist auch, dass das Positionserkennungssystem wenigstens zur Erkennung der Position eines Tieres oder mehrerer Tiere über Sende- und/oder Empfangseinrichtungen, Responder, (Fuß-)Rescounter, Transponder oder dergleichen funktioniert. Eine Lösung ohne eigene Energiequelle bei den einzelnen Tieren ist bevorzugt, da ein Aufladen von Akkus oder das Wechseln von Batterien unterbleiben kann. Andererseits bieten Batterien auch Betriebszeiten von bis zu mehreren Jahren. Ebenso ist ein Solarbetrieb möglich.

Besonders vorteilhaft ist es, wenn die Position mehrerer Tiere und insbesondere eines wesentlichen Anteils (oder im wesentlicher aller Tiere) der Herde erfassbar ist. Wenn eine bedeutende Anzahl der Tiere einer Herde lokalisiert werden kann, dann kann aus den Einzelwerten ein charakteristischer Herdenort wenigstens für diesen Anteil der Tiere an der Herde abgeleitet werden.

Der charakteristische Herdenort kann beispielsweise durch eine Art mathematische Schwerpunktbestimung oder dergleichen berechnet werden. Auch die Mittelwertbildung oder eine Bestimmung unter Berücksichtigung des minimalen Abstandsquadrates ist möglich.

Die Positionen der einzelnen Tiere und der charakteristische Herdenort können über der Zeit gespeichert werden. Anhand der gespeicherten Daten können statistische Auswertungen für einzelne Tiere oder die Herde insgesamt erfolgen. Mit den Ergebnissen kann dann eine Verbesserung der Milchleistung erzielbar sein.

In einer weiteren bevorzugten Weiterbildung, bei der der mobile Melkstand verfahrbar ist und ein charakteristischer Herdenort abgeleitet wird, ist es bevorzugt, dass der mobile Melkstand der Herde folgt. Dazu kann der mobile Melkstand zu wenigstens einem Zeitpunkt den charakteristischer Herdenort ableiten. Damit kann eine Positionsdifferenz zwischen mobilem Melkstand selbst und dem charakteristischer Herdenort abgeleitet werden.

Wenn die Entfernung ein bestimmtes Maß überschreitet, kann der mobile Melkstand automatisch näher zu der Herde fahren. Falls der mobile Melkstand nicht als automatisch verfahrbares Gerät ausgeführt ist, kann der mobile Melkstand auch ein Hinweissignal zu einer Bedienperson aussenden, um so auf die Entfernungsdifferenz aufmerksam zu machen. Die Bedienperson, die sich z.B. bei anderen Tätigkeiten im Stallbereich befindet, kann anhand der weiteren Daten dann entscheiden ob ein Verfahren oder Versetzen des mobilen Melkstands sinnvoll oder erforderlich ist.

Die Aussendung eines solchen Hinweissignals oder das automatische Verfahren des mobilen Melkstands kann auch programmgesteuert sein und nur erfolgen, wenn die Herde sich über einen längeren Zeitraum zu weit entfernt hat.

Die (eigenständige) Bewegung kann je nach Ausgestaltung auf vordefinierten Wegen erfolgen, die z.B. einprogrammiert sind. Die aktuell verfügbaren Wege können auch per Funk von dem mobilen Melkstand aktualisiert werden. Denkbar ist auch eine Art Schienensystem, welches eine Ortsanpassung des mobilen Melksystems auf dem Schienennetz ermöglicht.

Bei allen beschriebenen Ausgestaltungen ist es möglich, dass der mobile Melkstand in Richtung der größten Dichte an Empfangssignalen fährt, bis ein vorgegebener Höchstabstand wieder unterschritten wird.

Vorzugsweise ist der mobile Melkstand derart ausgebildet, dass das Chassis einen von dem Laufgang getrennten Technikraum trägt, in dem zumindest ein Milchtank, vorzugsweise auch das Melkzeug in seiner Ruhestellung angeordnet ist.

In einer bevorzugten Weiterbildung weist der mobile Melkstand eine Reinigungsund/oder Desinfektionseinrichtung auf, in welcher die Melkbecher des Melkzeuges in der Ruhestellung befindlich sind.

Wenn ein Antriebsmotor vorgesehen ist, kann dieser als Elektro- oder auch Verbrennungsmotor ausgebildet sein. Ein Verbrennungsmotor kann außer zum Fahrbetrieb auch zur Stromgenerierung für ein eventuelles Kühlsystem verwendet werden. Der Melkstand insgesamt kann z.B. auf der Oberseite eine Solaranlage aufweisen, die zur Stromgenerierung oder auch zur Wassererwärmung dienen kann.

Möglich ist es auch, an dem Melkstand Mittel vorzusehen, mit denen der Melkstand anhebbar ist. Beispielsweise kann der mobile Melkstand als Dreipunktgerät für den Anbau an einen Schlepper ausgebildet sein. In diesem Fall kann der mobile Melkstand auch von einem Schlepper aufgenommen und angehoben und dann an dem gewünschten Ort wieder abgesetzt werden.

Vorzugsweise ist der mobiler Melkstand derart ausgebildet, dass die Euterreinigungseinrichtung eine angetrieben rotierende Euterreinigungsbürste aufweist.

In einer bevorzugten Weiterbildung weist der mobile Melkstand eine Schnittestellenanordnung zum lösbaren Anschluss von Schläuchen auf, über die an dem Melkstandes gewonnene Milch abführbar und Futter bzw. Wasser dem Melkstand zuführbar ist.

Vorzugsweise ist ein den Laufgang von dem Melkplatz trennendes Gitter vorgesehen, an dessen stirnseitigen Enden Verbindungsmittel für eine Stallabtrennung angeordnet sind.

Weitere Einzelheiten, Vorteile und Merkmale der vorliegenden Erfindung ergeben sich aus der nachfolgenden Beschreibung eines Ausführungsbeispiels mit Bezug auf die Figuren . In diesen zeigen:
- Figur 1: eine schematische Draufsicht auf ein erstes Ausführungsbeispiel eines Melkstandes im Sommerbetrieb und
- Figur 2: eine Draufsicht auf den in Figur 1 gezeigten Melkstand im Winterbetrieb.
- Figur 3: eine schematische Ansicht eines weiteren Ausführungsbeispiels eines Melkstands auf einer Weide

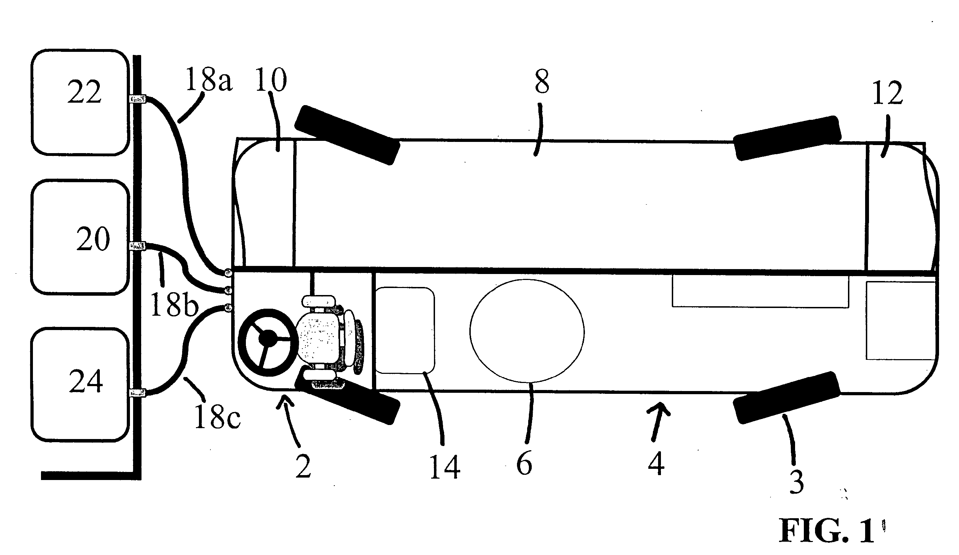

In Figur 1 ist ein erstes Ausführungsbeispiel eines mobilen Melkstands gezeigt, der als Selbstfahrer ausgebildet ist. Der Melkstand weist hierzu einen Führerstand 2 und Räder 3 auf. In Fahrzeuglängsrichtung ist der mobile Melkstand im wesentlichen zweigeteilt. Auf der in Fahrtrichtung linken Seite befindet sich hinter dem Führerstand 2 der Technikraum 4, auf den später noch eingegangen wird.

Die in Fahrtrichtung rechte Hälfte des mobilen Melkstandes weist einen Laufgang 8 mit einem Eingang 10 und einem Ausgang 12 auf. An dem Eingang 10 und dem Ausgang 12 können in an sich bekannter Weise sich automatisch öffnende Gatter vorgesehen sein. Der Laufgang 8 kann durch weitere Trenngitter, die sich ebenfalls automatisch betätigen lassen und welche den Laufgang 8 zeitweilig für die zu melkenden Tiere blockieren, in verschiedene Stellplätze unterteilt werden.

In dem Technikraum 4 befindet sich eine Einrichtung 6 zum automatischen Heranführen und Ansetzen, durch welche die Melkbecher eines Melkzeuges (nicht dargestellt) automatisch an die Zitzen eines auf dem Laufgang befindlichen Tieres herangeführt und angelegt werden können.

In Laufrichtung der Zustelleinrichtung 6 vorgelagert befindet sich eine Euterreinigungseinrichtung 14. Mit dieser Euterreinigungseinrichtung 14 kann das Euter des zu reinigenden Tieres vor dem Anlegen der Melkbecher gereinigt werden. Es ist auch möglich, dass der gleiche Greifarm, der die Melkbecher anlegt zuvor auch das Euter reinigt.

An geeigneter Stelle sind bei dem gezeigten Ausführungsbeispiel Sensoren ausgebildet, welche das Vorhandensein eines Tieres auf dem Laufgang feststellen, das Tier zur tierspezifischen Überwachung der Milch- und Futtermenge identifizieren, die Steuerung der Zustelleinrichtung 6 zum Anlegen der Melkbecher an die Zitzen regeln, die Steuerung der Reinigungsmittel der Euterreinigungseinrichtung steuern, usw.

Bei diesem ersten Ausführungsbeispiel ist an der vorderen Stirnseite des Fahrzeuges eine Schnittstellenanordnung 16 ausgebildet. Der mobile Melkstand weist an dieser Stelle Anschlüsse auf, an welche Schläuche 18a bis c anschließbar sind. Über den Schlauch 18b wird mittels des Melkstandes gewonnene und dort in einem gekühlten und hier nicht dargestellten Zwischentank gelagerte Milch zum Abtransport an einen gekühlten Milchtank 20 überführt. Der Schlauch 18a kommuniziert mit einem Kraftfuttervorrat 22. Der Schlauch 18c mit einem Frischwassertank 24. Beim Entleeren der ermolkenen Milch von dem Zwischentank in den Tank 20 werden die Wasser- und Kraftfuttervorräte des mobilen Melkstandes zeitgleich aufgefüllt.

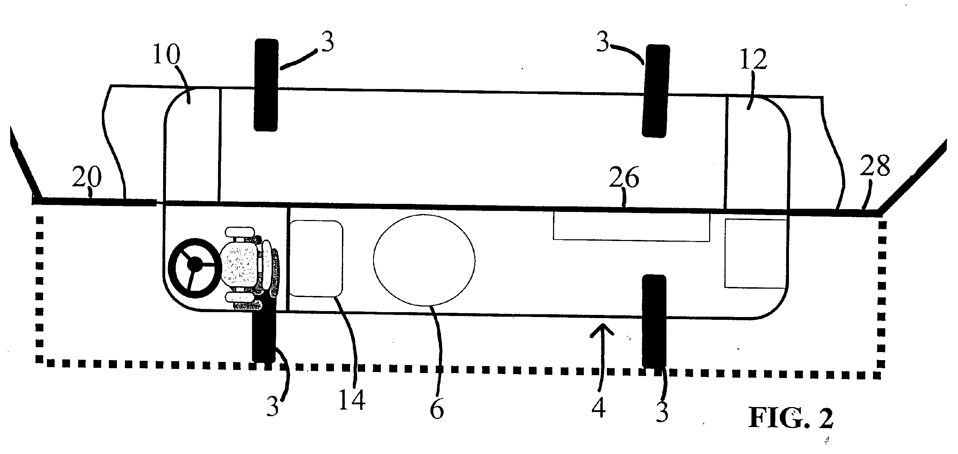

In Figur 2 ist das in Figur 1 dargestellte Ausführungsbeispiel eines mobilen Melkstandes im Winter gezeigt, und zwar in einer Absenkstellung, d.h. derjenigen Stellung, bei der das Chassis des Melkstandes auf den Boden abgesenkt ist. Hierbei sind die Räder 3 des selbstfahrenden Melkstandes um 90° zur üblichen Verfahrrichtung verschwenkt, um den mobilen Melkstand möglichst tief in die Absenkstellung absenken zu können.

Ein den Laufgang 8 und den Technikraum 4 voneinander trennendes Gitter 26 wird durch eine ortsfeste Stallabtrennung 28 fortgesetzt. An den beiderseitigen Enden des Trenngitters 26 sind hierfür entsprechende Befestigungsmittel für die Stallabtrennung 28 vorgesehen.

Bei dieser Anordnung befindet sich der in Fahrtrichtung rechte Teil der mobilen Melkanlage vollständig in der Stallung der zu melkenden Tiere. Diese können über den Eingang 10 nach Bedarf auf den Laufgang 8 gelangen, wie dies der natürliche Melkrhythmus vorgibt. Die Tiere werden dann automatisiert gemolken und verlassen den Laufgang 8 über den Ausgang 12. Die Stallabtrennungen 28 sowie das Sperrgitter 26 sind also Teil der Absperrung des Freilaufes der zu melkenden Tiere.

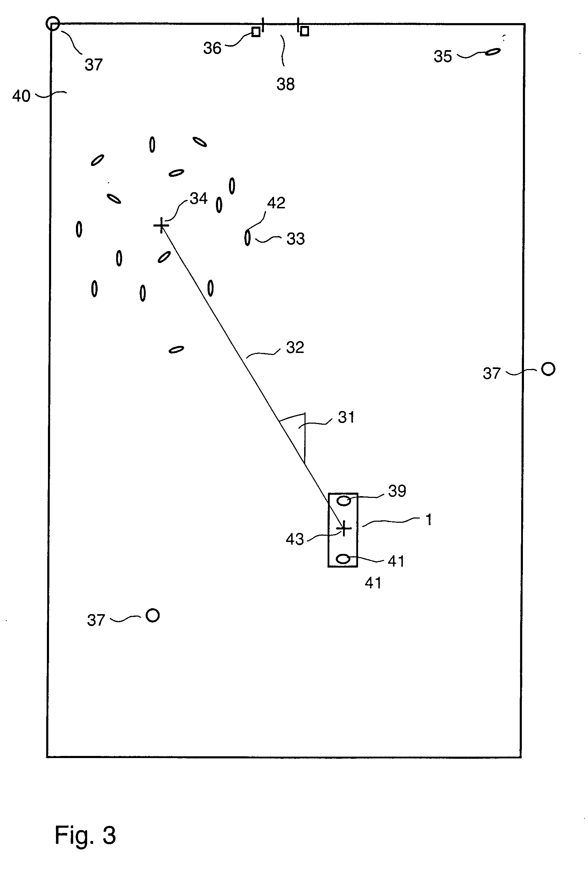

In Figur 3 ist ein zweites Ausführungsbeispiel des Melkstands 1 schematisch auf einer Weide 40 dargestellt. Der Melkstand 1 selbst kann in vielen Teilen mit dem mit bezug zu den Figuren 1 und 2 beschriebenem Melkstand übereinstimmen. Deshalb wird eine Beschreibung der übereinstimmenden Teile hier unterlassen und nur auf die Unterschiede eingegangen.

Der Melkstand 1 ist auf der Wiese 40 angeordnet, auf der sich eine Anzahl von Kühen 33, 35 befinden. Während in der Darstellung gemäß Figur 3 sich die meisten Tiere 33 in einer Gruuppe aufhalten, hat sich eine Kuh 35 davon relativ weit entfernt. Ein mittlerer bzw. gemittelter Aufenthaltsort für die Herde kann z.B. durch den charakteristischer Herdenort 34 angegeben werden, der durch ein geeignetes mathematisches Verfahren (Mittelwertbildung, Schwerpunktsbildung, minimale Summe der Abstandsquadrate etc.) abgeleitet werde, wenn die Position der Tiere bekannt ist.

Zur Bestimmung des charakteristischen Herdenortes 34 müssen nicht alle Tiere 33 berücksichtigt werden. Beispielsweise kann der Wert nur aus den Positionen der Tiere 33 abgeleitet werden, während das in der Abbildung gemäß Figur 3 einzeln stehende Tier 35 unberücksichtigt bleibt, weil es z.B. zu weit von dem Rest der Tiere entfernt ist. Ebenso können nur bestimmte Tiere berücksichtigt werden, die z.B. eine gewisse Zeitspanne nicht gemolken wurden oder die erfahrungsgemäß bald wieder an der Reihe zum Melken sind.

Dazu tragen die Tiere 33 z.B. eine Sende-/Empfangseinrichtung, die dazu vorbereitet ist, ein charakteristisches Tiersignal abzustrahlen, wenn die Empfangseinrichtung ein entsprechendes Signal aufnimmt. Es kann beispielsweise ein System verwendet werden, wie es auch heute schon zur Tiererkennung eingesetzt wird. Ein Sende-/Empfangseinrichtung 42, ein Transponder oder eine ähnliches Gerät eignet sich beispielsweise zur Tiererkennung.

Der Empfänger nimmt ein von außen eingestrahltes Signal auf, modifiziert das aufgenommene Signal und strahlt das modifizierte Signal wieder ab. Die Sendeenergie nommene Signal und strahlt das modifizierte Signal wieder ab. Die Sendeenergie kann dabei aus der Energie des eingestrahlten Empfangssignals entnommen oder auf sonstige Art gewonnen werden. Auch die Verwendung von Batterien, Akkumulatoren und dergleichen ist möglich. Ebenso kann die Energie zum Senden auch aus der Bewegung des Tieres abgeleitet werden, wie es z.B. bei Armbanduhren schon der Fall ist, bei denen die mechanische Bewegung der Uhr in elektrische Energie umgesetzt wird.

Das Sendesignal der Sender 37 wird von den Transpondern 42 der Tiere 33 aufgenommen. Hierbei ist es möglich, dass eine Ortsauswertung in dem Transponder 42 erfolgt, der aus dem Phasenversatz und der Laufzeit der einzelnen Signale der Sendeempfänger 37 eine Ortsbestimmung durchführt. Die Ortsangabe kann dann im wieder abgestrahlten Tiersignal zusammen mit einer Tieridentifikation kodiert enthalten sein.

Die einzelnen Tiersignale werden im Ausführungsbeispiel von dem Empfänger 39 des Melkstandes aufgenommen und ausgewertet. Damit erhält in dieser Variante der Melkstand 1 per Funk die Ortsangaben im wesentlicher aller Tiere 33. Es kann aber auch passieren, dass eines oder einige Tiere 35 derart entfernt stehen, dass eine zuverlässige Ortsbestimmung nicht mehr möglich ist.

Es ist auch möglich, dass der Melkstand 1 mittels des Senders 41 ein Signal ausstrahlt, dieses Signal von den Transpondern 42 der Tiere mit einer Tieridentifikation modifiziert und von den Sendeempfängern 37 aufgenommen wird, die dann die Ortsbestimmung der einzelnen Tiere 33 durchführen. Das Ergebnis kann wiederum per Funk an den Melkstand 1 gefunkt werden.

Unter Berücksichtigung des eigenen Standorts 43 wird in der Steuerung des Melkstands dann ein Abstand 32 und ein zugehöriger Winkel 31 zu dem charakteristischen Herdenort abgeleitet. Wenn der Abstand ein vorgegebenes Maß überschreitet kann der Melkstand 1 über den Sender 41 ein Signal zu einer Bedienkraft senden, um auf den überschrittenen Sollabstand aufmerksam zu machen. Dieser kann dann den Melkstand näher an die Herde heranbringen.

Im hier dargestellten Ausführungsbeispiel ist der Melkstand 1 aber derart ausgebildet, dass er sich auf dem Gelände der Weide 40 eigenständig bewegen kann. Um Unfälle und dergleichen zu vermeiden, ist eine geeignete Sensorik eingebaut, die auf Hindernisse in Bewegungsrichtung entsprechend rasch reagiert.

Anhand abgespeicherter Gelände- und/oder Wegeunterlagen fährt der Melkstand auf den charakteristischen Herdenort zu, um so wieder in Sichtweite des Hauptteils der Herde zu gelangen.

Die Ortsbestimmung des Melkstandes 1 kann ebenfalls mittels der Sender 37 erfolgen, deren Signale von dem Empfänger 39 des Melkstandes aufgenommen werden. Es ist aber auch eine Positionsbestimmung möglich, die ausgehend von einer Referenzposition, die zurückgelegten Wege und Richtungen verfolgt und abspeichert, so dass jederzeit der aktuelle Ort bekannt ist. Zur Kalibrierung kann beispielsweise am Tor 38 der Weide eine Ortskalibrierungseinheit 36 angeordnet sein, die bei passieren des Melkstandes dessen Ortsposition zurücksetzt.

Eine weitere Möglichkeit ist, dass programmgesteuert der Melkstand sich in die Nähe eines speziellen Tieres (oder auch mehrerer Tiere) begibt. Ein zu suchendes Tier kann z.B. anhand von den gespeicherten Daten bestimmt werden. Ein Kriterium dafür kann sein, dass seit dem Zeitpunkt des letzten Melkens eine vorbestimmte Zeit vergangen ist. Auch tierindividuelle Mermale können dafür eine Rolle spielen. So kann eine erhöhte Melkfrequenz für bestimmte Tiergruppen vorteilhaft sein. Durch den Sichtkontakt bedingt wird die Melkbereitschaft gesteigert. Ebenso kann der Melkstand auch zeitabhängig von einer zur nächsten Weide fahren.

### Bezugszeichenliste

- 2: Führerstand
- 3: Räder
- 4: Technikraum
- 6: Zustelleinrichtung
- 8: Laufgang
- 10: Eingang
- 12: Ausgang
- 14: Reinigungseinrichtung
- 16: Schnittstellenanordnung
- 18a-c: Schläuche
- 20: Milchtank
- 22: Kraftfuttervorrat
- 24: Frischwassertank
- 26: Sperrgitter
- 28: Stallabtrennung
- 31: Winkel
- 32: Abstand
- 33: Kuh
- 34: charakteristischer Herdenort
- 35: Kuh
- 36: Kalibrierungssender
- 37: Sender/Empfänger
- 38: Tor
- 39: Empfänger
- 40: Weide
- 41: Sender
- 42: Sender/Empfänger
- 43: Standort

## Patentansprüche

1. Mobiler Melkstand mit einem Melkbereich für das zu melkende Tier mit einem Eingang (10) an einem Ende und einem Ausgang (12), an einem anderen Ende und mit wenigstens einem an die Zitzen des in dem Melkbereich befindlichen zu melkenden Tieres anlegbaren Melkzeug mit Melkbechern,
wobei wenigstens eine Einrichtung (6) zum automatischen Heranführen der Melkbecher an die Zitzen des zu melkenden Tieres vorgesehen ist, und wobei der Melkstand fahrbar ist.

2. Mobiler Melkstand nach Anspruch 1, **gekennzeichnet durch** wenigstens einen Radsatz mit wenigstens zwei und vorzugsweise vier Rädern.

3. Mobiler Melkstand nach Anspruch 1 oder 2, **gekennzeichnet durch** ein zumindest den Laufgang (8) bildendes Bodenelement, welches gegenüber einem Rahmengestell von einer Verfahrstellung in eine Absenkstellung absenkbar ist.

4. Mobiler Melkstand nach Anspruch 1 oder 2 oder 3, **dadurch gekennzeichnet, dass** das Bodenelement beweglich zu einem mit Rädern versehenen Chassis ausgebildet ist.

5. Mobiler Melkstand nach einem der vorherigen Ansprüche, **dadurch gekennzeichnet, dass** das Bodenelement mit dem Chassis zu einer Einheit verbunden und zusammen mit dem Chassis in eine Absenkstellung absenkbar ist.

6. Mobiler Melkstand nach einem der vorherigen Ansprüche, **dadurch gekennzeichnet, dass** die Räder (3) in der Absenkstellung zumindest die Lauffläche wenigstens eines Teiles des Laufganges (8) überragen.

7. Mobiler Melkstand nach mindestens einem der Ansprüche 2 bis 6, **dadurch gekennzeichnet, dass** der Radsatz derart ausgebildet ist, dass der mobile Melkstand sowohl in üblicher Verfahrrichtung als auch in einer Richtung im Wesentlichen senkrecht zu der üblichen Verfahrrichtung verfahrbar ist.

8. Mobiler Melkstand nach mindestens einem Ansprüche 2 bis 7, **dadurch gekennzeichnet, dass** sämtliche Räder (3) des Radsatzes verschwenkbar sind.

9. Mobiler Melkstand nach einem der vorherigen Ansprüche, **dadurch gekennzeichnet, dass** die Einrichtung (6) zum automatischen Heranführen und Anlegen der Melkbecher an die Zitzen eine Greifeinrichtung aufweist, mit der das in der Ruhestellung befindliche Melkzeug greifbar ist.

10. Mobiler Melkstand nach Anspruch 9, **dadurch gekennzeichnet, dass** die Greifeinrichtung das Melkzeug in einer Ruhestellung unter dem Laufgang (8) angeordnet und zum Heranführen und Anlegen der Melkbecher an die Zitzen in eine über dem Laufgang (8) befindliche Stellung bewegbar ist.

11. Mobiler Melkstand nach Anspruch 10, **gekennzeichnet durch** eine das Melkzeug in der Ruhestellung abdeckende Verschlusseinrichtung, die in ihrer geschlossenen Stellung die Lauffläche des Laufganges (8) im Wesentlichen bündig abschließt.

12. Mobiler Melkstand nach einem der vorherigen Ansprüche, **gekennzeichnet durch** eine an das Euter des zu melkenden Tieres automatisch zustellbare Euterreinigungs- und/oder Desinfektionseinrichtung (14).

13. Mobiler Melkstand nach mindestens einem der vorherigen Ansprüche, **dadurch gekennzeichnet, dass** eine Nachbehandlungseinrichtung vorgesehen ist.

14. Mobiler Melkstand nach mindestens einem der vorherigen Ansprüche, **dadurch gekennzeichnet, dass** der Melkstand als automatischer Selbstfahrer ausgebildet ist.

15. Mobiler Melkstand nach mindestens einem der vorherigen Ansprüche, **dadurch gekennzeichnet, dass** wenigstens eine Positionserfassungseinrichtung vorgesehen ist.

16. Mobiler Melkstand nach mindestens einem der vorherigen Ansprüche, **dadurch gekennzeichnet, dass** wenigstens eine dieser wenigstens einen Positionserfassungseinrichtung zur Erfassung der Position des Melkstands ausgebildet ist.

17. Mobiler Melkstand nach mindestens einem der vorherigen Ansprüche, **dadurch gekennzeichnet, dass** wenigstens eine dieser wenigstens einen Positionserfassungseinrichtung zur Erfassung der Position wenigstens eines zu melkenden Tieres ausgebildet ist.

18. Mobiler Melkstand nach mindestens einem der vorherigen Ansprüche, **dadurch gekennzeichnet, dass** einer Steuereinheit derart beschaffen ist, dass ein charakteristischer Herdenort ableitbar ist.

19. Mobiler Melkstand nach mindestens einem der vorherigen Ansprüche, **dadurch gekennzeichnet, dass** der Melkstand derart beschaffen ist, dass ein bestimmter Ort im wesentlichen selbsttätig anfahrbar ist.
